# EUROPEAN PATENT APPLICATION

(11) **EP 4 325 973 A1**
(43) Date of publication of application: **21.02.2024**
(21) Application number: 22810642.3
(22) Date of filing: 27.05.2022
(51) Int. Cl.: H04W 72/04

(54) **METHODS FOR TRANSMITTING AND RECEIVING DATA, RESOURCE INDICATION METHOD AND APPARATUS, AND SYSTEM**

(30) Priority: 27.05.2021 CN 202110584976
(71) Applicant: Huawei Technologies Co., Ltd., Shenzhen, Guangdong 518129 (CN)
(72) Inventor: FAN, Weiwei, Shenzhen, Guangdong 518129 (CN); ZHANG, Peng, Shenzhen, Guangdong 518129 (CN); ZHANG, Jiayin, Shenzhen, Guangdong 518129 (CN); ZHOU, Guohua, Shenzhen, Guangdong 518129 (CN)
(74) Representative: Pfenning, Meinig & Partner mbB
(86) International application number: PCT/CN2022/095424
(87) International publication number: WO 2022/247918

(57) **Abstract**

Embodiments of this application relate to a data sending method, a data receiving method, a resource indication method, an apparatus, and a system, so that occupation and a waste of transmission resources can be reduced, and flexibility of resource scheduling can be improved. The method includes: A first terminal device receives a first message, where the first message indicates a first time window. The first terminal device sends first data to at least one second terminal device on at least one first transmission resource in the first time window. The at least one first transmission resource is a resource in a preconfigured sidelink transmission resource.

## Description

### CROSS-REFERENCE TO RELATED APPLICATIONS

This application claims priority to Chinese Patent Application No. 202110584976.8, filed with the China National Intellectual Property Administration on May 27, 2021 and entitled "DATA SENDING METHOD, DATA RECEIVING METHOD, RESOURCE INDICATION METHOD, APPARATUS, AND SYSTEM", which is incorporated herein by reference in its entirety.

### TECHNICAL FIELD

This application relates to the field of wireless communication technologies, and in particular, to a data sending method, a data receiving method, a resource indication method, an apparatus, and a system.

### BACKGROUND

When uplink transmission is performed based on user equipment (user equipment, UE) cooperation, a base station configures a configured grant (Configured Grant, CG) resource for source user equipment (source UE, SUE). The SUE sends to-be-transmitted uplink data to cooperation user equipment (cooperation UE, CUE) on the CG resource, and then the SUE and the CUE send uplink data to the base station.

The base station may configure parameters related to the CG resource by using radio resource control (radio resource control, RRC) signaling, and activate and deactivate, by using the RRC signaling, a transmission resource on which the SUE sends data to the CUE. Alternatively, the base station may configure parameters related to the CG resource by using both RRC signaling and downlink control information (downlink control information, DCI), and activate and deactivate, by using the DCI, a transmission resource on which the SUE sends data to the CUE.

During the period of time from activation of a transmission resource to deactivation of the transmission resource, even if there is no transmission requirement, the transmission resource remains valid. This leads to a waste of resources.

### SUMMARY

Embodiments of this application provide a data sending method, a data receiving method, a resource indication method, an apparatus, and a system, which are applied to a sidelink scenario, so that occupation and a waste of transmission resources can be reduced, and flexibility of resource scheduling can be improved.

According to a first aspect, a data sending method is provided. The method includes the following process: A first terminal device receives a first message. The first message indicates a first time window. The first terminal device sends first data to at least one second terminal device on at least one first transmission resource in the first time window. The at least one first transmission resource is a resource in a preconfigured sidelink transmission resource.

In this method, in the first time window, the first terminal device may send data to the at least one second terminal device by using a part of or all preconfigured transmission resources. The first time window may be dynamically configured, so that occupation and a waste of transmission resources can be reduced, and flexibility of resource scheduling can be improved.

Optionally, the sidelink transmission resource may be a periodic sidelink transmission resource, for example, a CG resource. Alternatively, the sidelink transmission resource may be an aperiodic sidelink transmission resource.

Optionally, a transmission resource outside the first time window is in an inactive state, is not used for data sending between terminal devices, and may be used for another purpose, so that occupation and a waste of transmission resources can be further reduced.

Optionally, a network device does not need to additionally send a transmission resource deactivation instruction to the first terminal device, so that flexibility of resource scheduling can be further improved, and signaling overheads can be reduced.

In a possible implementation, a start moment of the first time window is k slots after the first message is received. An end moment of the first time window is before a first uplink transmission resource. The first uplink transmission resource is used by the first terminal device to send second data to the network device, k is a positive integer. The first time window may be indicated in an implicit manner. A value of k may be related to duration for which the terminal device demodulates the first message. For example, the value of k is determined based on longest duration for which each terminal device demodulates the first message, to ensure that each terminal device can accurately demodulate the first message.

In a possible implementation, the value of k may be indicated by using radio resource control RRC signaling. For example, the first terminal device may further receive first RRC signaling. The first RRC signaling may include the value of k, or the first RRC signaling may include information used to determine the value of k. Optionally, each terminal device may determine/estimate, based on a capability of each terminal device, duration required for demodulating the first message, and then report the duration to the network device. The network device determines the value of k and delivers the value to the terminal device.

In a possible implementation, the first message further indicates a first configuration parameter. The first configuration parameter includes an offset value of a start moment of the first time window relative to a receiving moment of the first message and duration of the first time window. The first time window may be indicated in an explicit manner. Optionally, the offset value of the start moment of the first time window relative to the receiving moment of the first message may be equal to the value of k, or may not be equal to the value of k.

In a possible implementation, after receiving the first message, the first terminal device may further determine the start moment and an end moment of the first time window.

In a possible implementation, when the first terminal device sends the first data to the at least one second terminal device on the at least one first transmission resource in the first time window, the first terminal device may perform channel listening on the at least one first transmission resource. The first terminal device sends the first data to the at least one second terminal device on an occupied idle first transmission resource detected through listening on the at least one first transmission resource. In some scenarios, for example, when the first terminal device operates on an unlicensed frequency band, there may be an occupied transmission resource in the at least one activated first transmission resource. The first terminal device attempts to perform channel listening on the at least one first transmission resource, to perform data distribution on the idle first transmission resource that is not occupied. In this way, a success rate of sending data can be improved, and data sending reliability can be ensured.

In a possible implementation, the idle first transmission resource detected through listening is a first transmission resource on which listen before talk (listen before talk, LBT) succeeds.

In a possible implementation, the first message includes at least one piece of identification information, and the at least one first transmission resource is a resource in a sidelink transmission resource identified by the at least one piece of identification information. The network device may indicate the sidelink transmission resource used by the first terminal device to send the data, and the first terminal device may send the data on the at least one first transmission resource that belongs to the sidelink transmission resource indicated by the network device.

In a possible implementation, the first terminal device may further send the second data to the network device on the first uplink transmission resource. After the first terminal device sends the data to the at least one second terminal device, the first terminal device may perform cooperation transmission with the at least one second terminal device, and send the uplink data to the network device.

According to a second aspect, a data receiving method is provided. The method includes the following process: A second terminal device receives a second message, where the second message indicates a first time window. The second terminal device receives first data from a first terminal device in the first time window.

Optionally, a transmission resource outside the first time window is in an inactive state, is not used for data receiving between terminal devices, and may be used for another purpose, so that occupation and a waste of transmission resources can be further reduced.

Optionally, a network device does not need to additionally send a transmission resource deactivation instruction to the second terminal device, so that flexibility of resource scheduling can be further improved, and signaling overheads can be reduced.

In a possible implementation, a start moment of the first time window is k slots after the second message is received. An end moment of the first time window is before a first uplink transmission resource. The first uplink transmission resource is used by the second terminal device to send the first data to a network device. k is a positive integer.

In a possible implementation, a value of k may be indicated by using radio resource control RRC signaling. For example, the second terminal device may further receive second RRC signaling. The second RRC signaling may include the value of k, or the second RRC signaling may include information used to determine the value of k.

In a possible implementation, the second message further indicates a second configuration parameter. The second configuration parameter includes an offset value of a start moment of the first time window relative to a receiving moment of the second message and duration of the first time window.

In a possible implementation, after receiving the second message, the second terminal device may further determine the start moment and an end moment of the first time window.

In a possible implementation, the second terminal device may further send the first data to the network device on the first uplink transmission resource.

According to a third aspect, a resource indication method is provided. The method includes the following process:

A network device sends a first message to a first terminal device, where the first message indicates a first time window. The network device sends a second message to at least one second terminal device, where the second message indicates the first time window.

For the first terminal device, the first time window indicates the first terminal device to send first data to the at least one second terminal device on at least one first transmission resource in the first time window, and the at least one first transmission resource is a resource in a preconfigured sidelink transmission resource.

For the at least one second terminal device, the first time window indicates the at least one second terminal device to receive the first data from the first terminal device in the first time window.

In a possible implementation, a start moment of the first time window is k slots after the first message or the second message is sent. An end moment of the first time window is before a first uplink transmission resource. The first uplink transmission resource is used by the network device to receive second data from the first terminal device and/or the first data from the at least one second terminal device, k is a positive integer.

In some cases, the network device may send the first message and the second message at a same moment (for example, in a same slot), and the first terminal device and the at least one second terminal device may respectively receive the first message and the second message at a same moment. In this way, start moments that are of the first time window and that are determined by the first terminal device and the at least one second terminal device are the same.

In a possible implementation, a value of k is indicated by using radio resource control RRC signaling. For example, the network device may further send first RRC signaling to the first terminal device. The first RRC signaling may include the value of k, or the first RRC signaling may include information used to determine the value of k. The network device may further send second RRC signaling to the at least one second terminal device. The second RRC signaling may include the value of k, or the second RRC signaling may include information used to determine the value of k.

In a possible implementation, the first message further indicates a first configuration parameter. The first configuration parameter includes an offset value of a start moment of the first time window relative to a receiving moment of the first message and duration of the first time window.

The second message further indicates a second configuration parameter. The second configuration parameter includes an offset value of the start moment of the first time window relative to a receiving moment of the second message and the duration of the first time window.

In a possible implementation, the first message includes at least one piece of identification information, and the at least one first transmission resource is a resource in a sidelink transmission resource identified by the at least one piece of identification information.

In a possible implementation, the network device may further receive, on the first uplink transmission resource, the second data from the first terminal device and/or the first data from the at least one second terminal device.

According to a fourth aspect, a communication system is provided. The communication system includes a network device, a first terminal device, and at least one second terminal device.

The network device is configured to: send a first message to the first terminal device, where the first message indicates a first time window; and send a second message to the at least one second terminal device, where the second message indicates the first time window.

The first terminal device is configured to receive the first message, and send first data to the at least one second terminal device on at least one first transmission resource in the first time window. The at least one first transmission resource is a resource in a preconfigured sidelink transmission resource.

The at least one second terminal device is configured to receive the second message, and receive the first data in the first time window.

In a possible implementation, a start moment of the first time window is k slots after the first message or the second message is received. An end moment of the first time window is before a first uplink transmission resource. The first uplink transmission resource is used by the first terminal device to send second data to the network device, and/or the first uplink transmission resource is used by the at least one second terminal device to send the first data to the network device, k is a positive integer.

In a possible implementation, a value of k is indicated by using radio resource control RRC signaling.

In a possible implementation, the first message further indicates a first configuration parameter. The first configuration parameter includes an offset value of a start moment of the first time window relative to a receiving moment of the first message and duration of the first time window. The second message further indicates a second configuration parameter. The second configuration parameter includes an offset value of the start moment of the first time window relative to a receiving moment of the second message and the duration of the first time window.

In a possible implementation, the first terminal device is configured to perform channel listening on the at least one first transmission resource, and send the first data to the at least one second terminal device on an idle first transmission resource detected through listening on the at least one first transmission resource.

In a possible implementation, the idle first transmission resource detected through listening is a first transmission resource on which LBT succeeds.

In a possible implementation, the first message includes at least one piece of identification information, and the at least one first transmission resource is a resource in a sidelink transmission resource identified by the at least one piece of identification information.

In a possible implementation, the first terminal device is further configured to send the second data on the first uplink transmission resource.

The at least one second terminal device is further configured to send the first data on the first uplink transmission resource.

The network device is further configured to receive, on the first uplink transmission resource, the second data from the first terminal device and/or the first data from the at least one second terminal device.

According to a fifth aspect, a communication apparatus is provided. The apparatus provided in this application has functions of implementing the foregoing method aspects, and includes a corresponding means (means) configured to perform the steps or functions described in the foregoing method aspects. The steps or functions may be implemented by using software, hardware (for example, a circuit), or a combination of hardware and software.

In a possible design, the foregoing apparatus includes one or more processing units and communication units. The one or more processing units are configured to support the apparatus in performing the functions in the foregoing methods.

Optionally, the apparatus may further include one or more storage units. The storage unit is configured to be coupled to the processing unit. The storage unit stores a computer program (also referred to as an instruction) and/or data necessary for the apparatus. The one or more storage units may be integrated with the processing unit, or may be disposed separately from the processing unit. This is not limited in this application.

In another possible design, the apparatus includes a transceiver, a processor, and a memory. The processor is configured to control the transceiver or an input/output circuit to receive and send a signal. The memory is configured to store a computer program. The processor is configured to run the computer program in the memory, so that the apparatus performs the method in any one of the first aspect, the second aspect, or the third aspect, or the possible implementations of the first aspect, the second aspect, or the third aspect.

According to a sixth aspect, a computer-readable storage medium is provided, and is configured to store a computer program. The computer program includes an instruction used to perform the method in any one of the first aspect, the second aspect, or the third aspect, or the possible implementations of the first aspect, the second aspect, or the third aspect.

According to a seventh aspect, a computer program product is provided. The computer program product includes a computer program. When the computer program is run on a computer, the computer is enabled to perform the method in any one of the first aspect, the second aspect, or the third aspect, or the possible implementations of the first aspect, the second aspect, or the third aspect.

Optionally, the computer can implement functions of a communication apparatus, or the computer may be a communication apparatus.

Optionally, the computer can implement functions of a first terminal device, a second terminal device, or a network device, or the computer may be a first terminal device, a second terminal device, or a network device.

According to an eighth aspect, a chip is provided. The chip includes a transceiver configured to implement functions in the methods in the foregoing aspects, for example, receiving or sending data and/or information in the foregoing methods.

In a possible design, the chip further includes a memory. The memory is configured to store a computer program and/or data.

According to a ninth aspect, a communication apparatus is provided. The communication apparatus includes a logic circuit and an interface circuit. The interface circuit is configured to communicate with a module other than the communication apparatus. The logic circuit is configured to run a computer program to perform the method in any one of the foregoing aspects. The communication apparatus may be the first terminal device, the second terminal device, or the network device in the first aspect, the second aspect, or the third aspect, or an apparatus including the first terminal device, the second terminal device, or the network device, or an apparatus included in the first terminal device, the second terminal device, or the network device, for example, a chip.

Alternatively, the interface circuit may be a code/data read/write interface circuit. The interface circuit is configured to receive a computer program (the computer program is stored in a memory, and may be directly read from the memory, or may be read via another component) and transmit the computer program to the interface circuit, so that the interface circuit runs the computer program to perform the method in any one of the foregoing aspects.

Optionally, the communication apparatus may be a chip.

For technical effects that can be achieved in the second aspect to the ninth aspect, refer to descriptions of technical effects that can be achieved in the first aspect. Details are not described herein again.

### BRIEF DESCRIPTION OF DRAWINGS

FIG. 1 is a schematic diagram of a cooperation transmission process;
FIG. 2 is a schematic diagram of an architecture of a communication system according to an embodiment of this application;
FIG. 3(a) is a schematic diagram of a configured grant type 1;
FIG. 3(b) is a schematic diagram of a configured grant type 2;
FIG. 4 is a schematic diagram of a communication process according to an embodiment of this application;
FIG. 5 is a schematic diagram of a configured grant resource according to an embodiment of this application;
FIG. 6 is a schematic diagram of communication according to an embodiment of this application;
FIG. 7 is a schematic diagram of another communication according to an embodiment of this application;
FIG. 8 is a schematic diagram of an architecture of a communication system according to an embodiment of this application;
FIG. 9 is a schematic diagram of an architecture of another communication system according to an embodiment of this application;
FIG. 10 is a schematic diagram of a structure of a communication apparatus according to an embodiment of this application;
FIG. 11 is a schematic diagram of a structure of a communication apparatus according to an embodiment of this application;
FIG. 12 is a schematic diagram of a structure of a communication apparatus according to an embodiment of this application;
FIG. 13 is a schematic diagram of a structure of a communication apparatus according to an embodiment of this application; and
FIG. 14 is a schematic diagram of a structure of a communication apparatus according to an embodiment of this application.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

Network architectures and service scenarios described in embodiments of this application are intended to more clearly describe technical solutions in embodiments of this application, but are not intended to limit the technical solutions provided in embodiments of this application. A person of ordinary skill in the art may know that as the network architectures evolve and a new service scenario emerges, the technical solutions provided in embodiments of this application are also applicable to a similar technical problem.

The following describes some terms in embodiments of this application, to facilitate understanding of a person skilled in the art.
(1) Device-to-device (device to device, D2D) communication, also referred to as sidelink (Sidelink, SL) communication, is a communication manner in which two user equipments directly communicate with each other. A D2D communication technology may enable user equipment in a specific range to directly communicate, to reduce load on a serving base station. D2D communication has different applications in different scenarios, for example, a Bluetooth connection or a Wi-Fi direct connection (direct connection) in a wireless fidelity (wireless fidelity, Wi-Fi) network. Bluetooth is a short-range time division duplex communication technology. Wi-Fi is a wireless communication technology, and the Wi-Fi direct connection is a communication technology that allows devices in the wireless network to be connected to each other without using a wireless router.
   A 3rd generation partnership project (3rd generation partnership project, 3GPP) introduces a D2D communication technology of a long term evolution-vehicle (long term evolution-vehicle, LTE-V) technology to long term evolution (long term evolution, LTE), and applies D2D communication to an internet of vehicles for communication between vehicles or between a vehicle and another device. A 5th generation (5th Generation, 5G) access network technology is referred to as a new radio access technology (new radio access technology, NR), and aims to provide a faster communication rate and a larger access quantity than a 4th-generation (4th-generation, 4G) technology. A 5G protocol introduces an NR-vehicle-to-everything (vehicle-to-everything, V2X) technology as an enhancement of an LTE-V2X technology.
(2) A terminal device, also referred to as user equipment (UE), is a device with a wireless transceiver function, and may communicate with one or more core network (core network, CN) devices (which may also be referred to as core devices) by using an access network device (which may also be referred to as an access device) in a radio access network (radio access network, RAN).

The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed on land, where the deployment includes indoor or outdoor, or handheld or vehicle-mounted deployment, may be deployed on water (for example, on a ship), or may be deployed in air (for example, on aircraft, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device with a wireless communication function, a computing device, another device connected to a wireless modem, a vehicle-mounted device, a wearable device, an unmanned aerial vehicle device, a terminal in an internet of things or an internet of vehicles, a terminal in any form in a 5G network and a future network, relay user equipment, a terminal in a future evolved public land mobile network (public land mobile network, PLMN), or the like. The relay user equipment may, for example, be a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A type, a kind, or the like of the terminal device is not limited in embodiments of this application.

In a scenario in which uplink transmission is performed based on UE cooperation, the user equipment may include source UE (SUE), cooperation UE (CUE), and the like. For ease of description, the scenario in which uplink transmission is performed based on UE cooperation is referred to as a cooperation transmission scenario below. The cooperation transmission scenario may include at least one SUE and at least one CUE. In an example, the cooperation transmission scenario includes one SUE and a plurality of CUEs.

(3) A network device is a device that can provide a wireless access function for a terminal. The network device may support at least one wireless communication technology, for example, LTE, NR, wideband code division multiple access (wideband code division multiple access, WCDMA), or Wi-Fi.

For example, the network device may include an access network device. For example, the network device includes but is not limited to: a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmitting and receiving point (transmitting and receiving point, TRP), a transmitting point (transmitting point, TP), a mobile switching center, a small cell, and a micro base station. Alternatively, the network device may be a radio controller, a central unit (central unit, CU), and/or a distributed unit (distributed unit, DU) in a cloud radio access network (cloud radio access network, CRAN) scenario, or the network device may be a relay station, an access point (Access Point, AP), a vehicle-mounted device, a terminal, a wearable device, a network device in future mobile communication, a network device in a future evolved public land mobile network (public land mobile network, PLMN), or the like.

For another example, the network device may include a core network (CN) device, and the core network device includes, for example, an access and mobility management function (access and mobility management function, AMF).

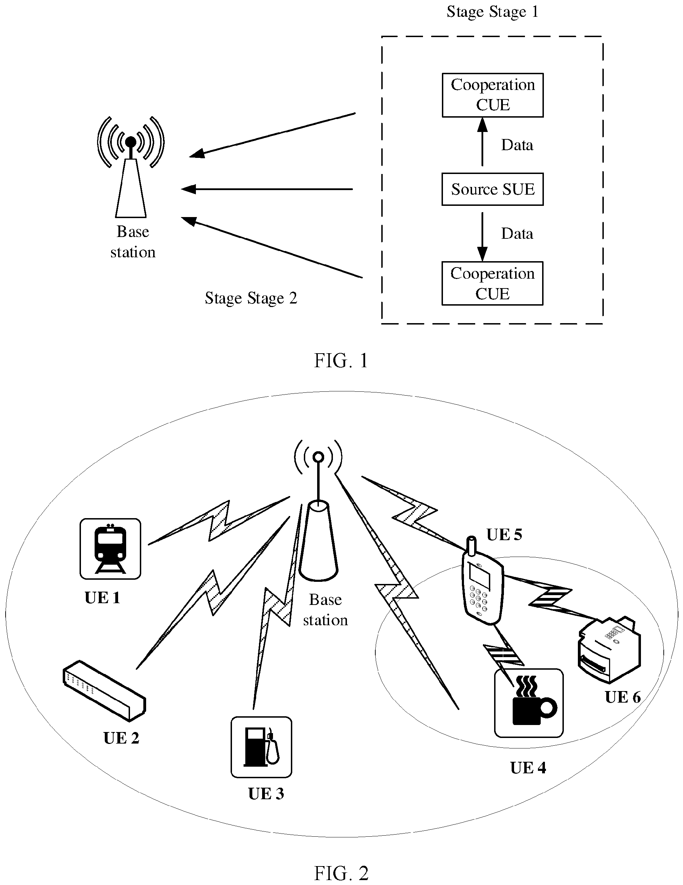

(4) Cooperation transmission, that is, uplink transmission based on UE cooperation, can improve efficiency and reliability of uplink transmission. As shown in FIG. 1, cooperation transmission includes at least two stages (Stages). In a stage 1, SUE sends to-be-transmitted data to CUE on a transmission resource configured by a base station, and the to-be-transmitted data is uplink data that the SUE needs to send. In a stage 2, the SUE and the CUE send uplink data to the base station, and uplink data of the CUE includes the to-be-transmitted data from the SUE. In the stage 1, the transmission resource configured by the base station may be an SL link transmission resource, and the SUE may directly send the to-be-transmitted data to the CUE through the SL link. The data to be transmitted from the SUE may also be considered as SL data in the stage 1. The SUE and the CUE that perform cooperation transmission may be considered as one virtual (Virtual) UE to send data to the base station. From the perspective of the base station, it may be understood that the base station receives the data from the virtual UE.

The uplink data sent by the SUE to the base station may be the same as or different from the uplink data sent by the CUE to the base station. For example, the SUE sends first data to the CUE, the CUE sends the first data to the base station, and the SUE sends second data to the base station. If the first data is the same as the second data, reliability of uplink data transmission can be improved. If the first data is different from the second data, efficiency of uplink data transmission can be improved. In FIG. 1, the data sent by the SUE to two CUEs may be the same or different. This is not limited in embodiments of this application.

In a possible scenario, a 5G industrial scenario requires an ultra-large uplink capacity, and may require an uplink rate that reaches 1 Gbps (gigabit per second). For transmission of a large data packet, the SUE may experience limitations in terms of a quantity of antennas/an uplink bandwidth. In this case, the SUE may send, to the CUE, some data that needs to be sent by the SUE. The CUE may send, to the base station, some data that needs to be sent by the SUE, to improve efficiency of uplink data transmission. In this scenario, the SUE and the CUE send different uplink data.

(5) Configured grant (Configured Grant, CG) is a mechanism that is introduced to an R15 version of NR to reduce scheduling latency and that is used to configure a periodic transmission resource for user equipment. The user equipment may send data on a transmission resource preconfigured by a network device, without waiting for a transmission resource dynamically scheduled by a base station, to reduce the scheduling latency, reduce transmission latency caused by scheduling signaling of the base station, and reduce transmission latency caused by demodulation of the scheduling signaling by the user equipment.

In embodiments of this application, the periodic transmission resource configured by using the configured grant is referred to as a CG resource.

In a cooperation transmission scenario, the CG resource may be used by SUE to send data to CUE. In other words, the SUE may send the data to the CUE on the CG resource configured by the base station. Optionally, the CG resource may be used by the SUE to send data to the base station. In other words, the SUE may send the data to the base station on the CG resource configured by the base station.

(6) A universal user to network interface (user to network interface - universal, Uu) grant message is a message between user equipment and a base station. The Uu grant message is used to allocate an uplink transmission resource, and the uplink transmission resource is used by the user equipment to send uplink data to the base station. In the stage 2 of a cooperation transmission scenario, SUE and/or CUE may send uplink data to the base station on the uplink transmission resource allocated by the Uu grant message.

Optionally, the uplink transmission resource may be a physical uplink shared channel (physical uplink shared channel, PUSCH).

The Uu grant message is a downlink control information (downlink control information, DCI) message. For example, the Uu grant message is a DCI format 0_0 or a DCI format 0_1. The DCI format 0_1 has a reserved (Reserved) field.

In this application, the term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects.

"A plurality of in this application means two or more.

In addition, it should be understood that terms such as "first" and "second" in the description of this application are merely used for distinguishing and description, but should not be understood as indicating or implying relative importance, or should not be understood as indicating or implying a sequence.

Technical solutions in embodiments of this application may be applied to various communication systems (also referred to as mobile communication systems or wireless communication systems). A communication system usually includes but is not limited to a 4G network, an LTE system, an LTE frequency division duplex (frequency division duplex, FDD) system, LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G communication system or NR, and another future communication system such as 6G. This application may also be applied to another communication system, for example, a short-range communication system. For example, the short-range communication system includes a Wi-Fi network.

FIG. 2 shows a possible architecture of a communication system, including one or more network devices (for example, a base station in FIG. 2) and one or more terminal devices (for example, UE 1 to UE 6 in FIG. 2). A base station may send data to the UE 1 to UE 6, and the UE 1 to UE 6 may also send uplink data to the base station. Optionally, UE 4, UE 5, and the UE 6 may form a communication system. In the communication system, the base station may send downlink data to the UE 1, UE 2, the UE 5, and the like. The UE 5 may forward the downlink data to the UE 4 and the UE 6. For example, the UE 5 may be customer-premises equipment (customer-premises equipment, CPE), and data between UE and the base station may be forwarded by using the CPE.

Optionally, the network device and the terminal device may operate on a licensed frequency band, or operate on an unlicensed (Unlicensed) frequency band. For example, in a 5G NR unlicensed system and a Wi-Fi communication system, the network device and the terminal device communicate with each other on an unlicensed frequency band. The network device and the terminal device (including a first terminal device and/or a second terminal device) may communicate with each other on a licensed frequency band or an unlicensed frequency band. This is not limited in embodiments of this application.

The following briefly describes a configured grant configuration manner in NR. In NR, the configured grant configuration manner includes a type (Type) 1 and a type 2.

In the configuration manner type 1, radio resource control (radio resource control, RRC) signaling is used to configure parameters related to a CG resource, and the RRC signaling is used to activate and deactivate the CG resource. The RRC signaling includes one or more of the following parameters: a demodulation reference signal (demodulation reference signal DMRS) of the CG resource, a modulation and coding scheme (modulation and coding scheme, MCS), a time domain resource, a frequency domain resource, a periodicity (periodicity) of the CG resource, a quantity of repetitions (repK), and the like.

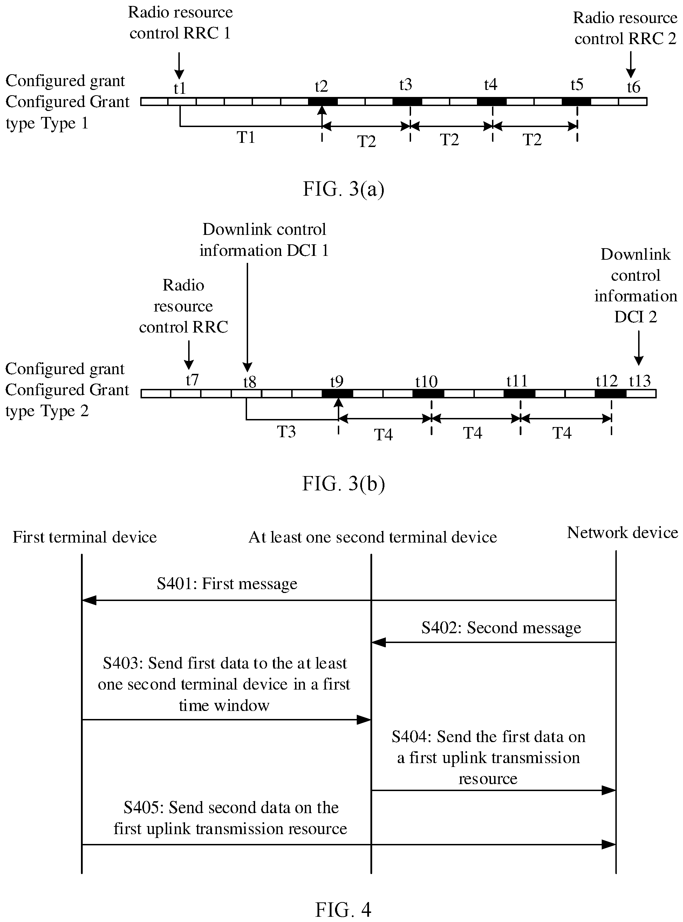

As shown in FIG. 3(a), each block represents a transmission resource unit (for example, a slot). The UE receives RRC 1 signaling from the base station at a moment 11. Duration required by the UE to parse the RRC 1 signaling and prepare subsequent data is T1. The RRC 1 signaling is used to configure the parameters related to the CG resource. For example, a periodicity, of the CG resource, configured by using the RRC 1 signaling is T2. The RRC 1 signaling is further used to activate the CG resource. The UE performs cooperation transmission on the activated CG resource. Possible CG resources are shown as black blocks in FIG. 3(a) and, for example, include CG resources at moments t2, t3, t4, and t5. The UE receives RRC 2 signaling from the base station at a moment t6. The RRC 2 signaling is used to deactivate the CG resource, and the deactivated CG resource (for example, a CG resource after the moment t6) is not used for cooperation transmission.

Latency between the RRC signaling used to activate the transmission resource and the RRC signaling used to deactivate the transmission resource is large, which is not suitable for a cooperation transmission scenario that requires a quick response. In a time period from time when the transmission resource is activated by using RRC signaling to time when transmission resource is deactivated by using RRC signaling, even if there is no transmission requirement, the transmission resource remains valid and cannot be released by the network device for use by another UE, downlink transmission, or the like. This leads to a waste of resources.

In the configuration manner type 2, the parameters related to the CG resource are configured by using both the RRC signaling and DCI. A transmission-related parameter in the parameters related to the CG resource is configured by using the DCI. For example, the DCI includes one or more of the following parameters: a time domain resource, a frequency domain resource, an MCS, and the like. A parameter other than the transmission-related parameter is configured by using the RRC signaling. For example, the RRC signaling includes one or more of the following parameters: a DMRS of the CG resource, a periodicity of the CG resource, a repK, and the like. In the type 2, the CG resource is activated and deactivated by using the DCI. The DCI is carried on a physical downlink control channel (physical downlink control channel, PDCCH).

As shown in FIG. 3(b), each block represents a transmission resource unit (for example, a slot). The UE receives RRC signaling from the base station at a moment t7. The RRC signaling is used to configure a part of the parameters related to the CG resource. For example, a periodicity, of the CG resource, configured by using the RRC signaling is T4. The UE receives DCI 1 from the base station at a moment t8. The DCI 1 is used to configure a part of the parameters related to the CG resource, and is further used to activate the CG resource. Duration required by the UE to parse the DCI 1 and prepare subsequent data is T3. The UE performs cooperation transmission on an activated CG resource. Possible CG resources are shown as black blocks in FIG. 3(b) and, for example, include CG resources at moments t9, 110, 111, and t12. The UE receives DCI 2 from the base station at a moment t13. The DCI 2 is used to deactivate the CG resource, and the deactivated CG resource (for example, a CG resource after the moment t13) is not used for cooperation transmission.

In a time period from a time when the transmission resource is activated by using the DCI to a time when the transmission resource is deactivated by using the DCI, even if there is no transmission requirement, the transmission resource remains valid and cannot be used by another UE or network device. This leads to a waste of resources.

Based on this, embodiments of this application provide a data sending method, a data receiving method, and a resource indication method. A network device sends a first message to a first terminal device. The first terminal device sends, based on an indication of the first message, first data to at least one second terminal device on at least one first transmission resource in a first time window. The at least one first transmission resource is a resource in a preconfigured sidelink transmission resource. In this way, in the first time window, the first terminal device may send the first data to the at least one second terminal by using a part of or all transmission resources preconfigured by the network device. The first time window may be dynamically configured, so that occupation and a waste of transmission resources can be reduced, and flexibility of resource scheduling can be improved.

The data sending method, the data receiving method, and the resource indication method that are provided in embodiments of this application may be applied to the communication system shown in FIG. 2. Refer to FIG. 4. The following describes, by using a possible communication process, a data sending method, a data receiving method, and a resource indication method that are provided in embodiments of this application. The process includes the following steps.

S401: A network device sends a first message to a first terminal device, and the first terminal device receives the first message.

S402: The network device sends a second message to at least one second terminal device, and the at least one second terminal device receives the second message.

In a cooperation transmission scenario, one or more second terminal devices are cooperation terminal devices of the first terminal device. In this embodiment of this application, an example in which the network device is an access network device (for example, a base station), the first terminal device is SUE, and the one or more second terminal devices are CUE is mainly used for description. It may be understood that in this embodiment of this application, one second terminal device is mainly used for description. Implementation processes of a plurality of second terminal devices are similar, and details are not described again.

The first message indicates a first time window. For the first terminal device, the first time window is used by the first terminal device to send first data to the at least one second terminal device on at least one first transmission resource in the first time window. The second message indicates the first time window. For the at least one second terminal device, the first time window is used by the at least one second terminal device to receive the first data. In a cooperation transmission scenario, the first data is data on which cooperation transmission is performed. The following mainly describes the first message. The second message is similar to the first message, and similarities are not described again.

The first message may be a signaling message, or the first message is a field (field) in a signaling message. The signaling message involved herein may be a reused existing signaling message, or is a newly constructed signaling message. Optionally, the signaling message may be DCI. The DCI is used as a layer 1 (L1) message. L1 is a bottom layer of a protocol layer, namely, a physical layer. Because RRC signaling needs to be forwarded and processed by the physical layer and a higher layer, and the L1 message may be directly responded to at the physical layer, the L1 message may be quickly responded to and processed. Therefore, the terminal device can quickly respond and perform processing, which is more applicable to a cooperation transmission scenario that has a high requirement for quick response, so that efficiency and flexibility of resource scheduling and cooperation transmission can be further improved. For example, the signaling message may be a Uu grant message, the first message may be a field in the Uu grant message, and the Uu grant message is a DCI message. Optionally, the first message may be supplemented based on an existing field in the Uu grant message. The first message occupies 1 bit (bit) or n bits, and n is a positive integer greater than 1. For example, the first message is added to a reserved field of the Uu grant message. To be specific, the first message is carried in the Uu grant message sent to the first terminal device. For example, an "SL_Configured_enable" field is added to a DCI format 0_1, and the "SL_Configured_enable" field may use a reserved (Reserved) field in the DCI format 0_1. Herein, the Uu grant message may be used to schedule a transmission resource between terminal devices, and schedule an uplink transmission resource between the terminal device and a base station. To be specific, resources in the stage 1 and the stage 2 may be scheduled at the same time, so that flexibility of transmission resource scheduling can be improved, and signaling overheads can be further reduced. Similar to the first message, the second message may also be a signaling message, or the second message may be a field in the signaling message. For example, the second message may be added to the reserved field of the Uu grant message. To be specific, the second message is carried in the Uu grant message sent to the second terminal device.

Optionally, the first message is used to activate all transmission resources in the first time window, or the first message is used to activate the at least one first transmission resource in the first time window. The at least one first transmission resource is a resource in a preconfigured sidelink transmission resource. Optionally, the sidelink transmission resource may be a periodic sidelink transmission resource, or the sidelink transmission resource may be an aperiodic sidelink transmission resource. An activated transmission resource (for example, all transmission resources or the at least one first transmission resource) in the first time window is in an active state (also referred to as a valid state). The transmission resource in the active state may be used by the first terminal device to send the data to the at least one second terminal device. Optionally, a transmission resource outside the first time window is in an inactive state (also referred to as an invalid state or an expired state). The transmission resource in the inactive state is not used by the first terminal device to send the data to the at least one second terminal device. Therefore, the transmission resource in the first time window is occupied, and the transmission resource outside the first time window is not occupied, so that transmission resources can be reduced, and occupation and a waste of transmission resources can be further reduced. In comparison with that transmission resource activation and transmission resource deactivation need to be separately indicated by using signaling, in this embodiment of this application, the network device may optionally not send additional deactivation signaling, so that signaling overheads can be further reduced, and flexibility of transmission resource scheduling can be further improved.

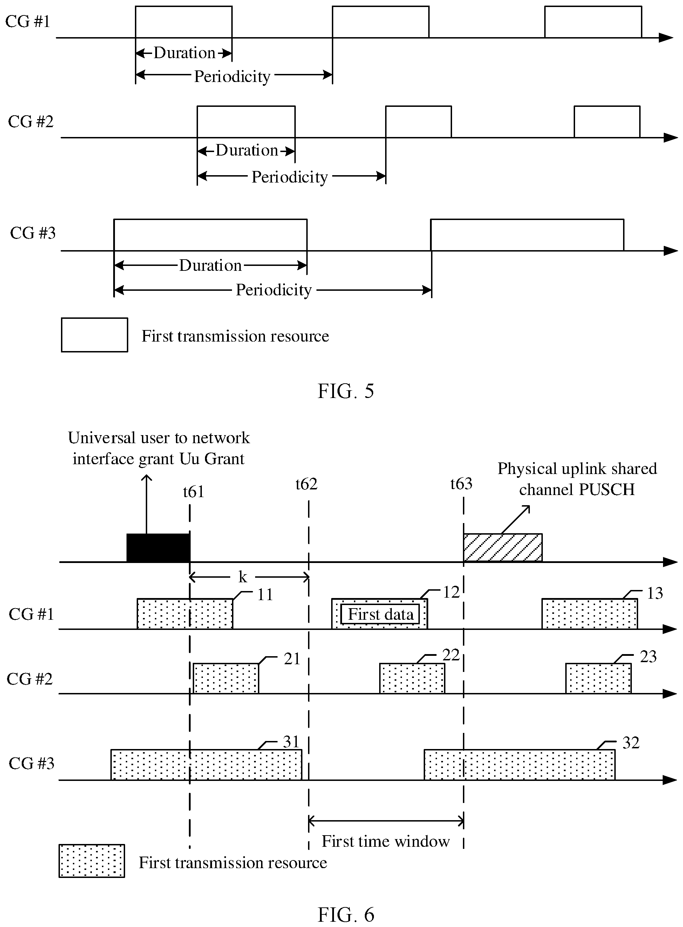

If the at least one first transmission resource belongs to the preconfigured periodic sidelink transmission resource, the periodic sidelink transmission resource may be a CG resource. The periodic sidelink transmission resource may be preconfigured for the first terminal device by default according to a protocol, or may be preconfigured by the network device for the first terminal device by using semi-static or dynamic signaling. For example, the network device sends a third message (for example, the third message may be RRC signaling) to the first terminal device. The third message is used to configure a plurality of periodic sidelink transmission resources, and different periodic sidelink transmission resources may be distinguished by using different identifiers. The different periodic sidelink transmission resources may correspond to different duration and periodicities. If the third message is used to configure a plurality of CG resources, as shown in FIG. 5, the plurality of CG resources are distinguished by using different numbers, for example, a CG #1, a CG #2, and a CG #3. The CG #1, the CG #2, and the CG #3 have different duration and periodicities.

Optionally, the periodic sidelink transmission resource may be preconfigured for the second terminal device by default according to a protocol, or may be preconfigured by the network device for the second terminal device by using semi-static or dynamic signaling.

In a possible manner, the first message occupies 1 bit. When the 1 bit is 1, the first message is used to activate one first transmission resource. Alternatively, when the 1 bit is 0, the first message is used to activate one first transmission resource.

In another possible manner, the first message occupies n bits, and is used to activate some transmission resources that are in the first time window and that are earliest in time domain (that is, earliest in time domain in a time sequence). n is an integer greater than or equal to 1. For example, when all the n bits are 1, the first message is used to activate 2ⁿ first transmission resources that are in the first time window and that are earliest in time domain.

The following describes the first time window in an example. The first time window may be indicated in an explicit or implicit manner.

When the first time window is indicated in an explicit manner, the first message may be further used to indicate a first configuration parameter. The first configuration parameter includes an offset value of a start moment of the first time window relative to a receiving moment of the first message and duration of the first time window. The duration of the first time window may be represented by L. The first terminal device may determine the first time window based on the first configuration parameter. The offset value of the start moment of the first time window relative to the receiving moment of the first message may be used to determine the start moment of the first time window. For example, the offset value of the start moment of the first time window relative to the receiving moment of the first message is k (which may be in a unit of a slot, a symbol, or the like). Optionally, the offset value is an offset value of the start moment of the first time window relative to a receiving moment of a last symbol of the first message. For example, a slot in which the first terminal device receives the last symbol of the first message is used as the first slot. The (k+1)^{th} slot that is k slots after the first slot is determined, and the (k+1)^{th} slot is used as the start moment of the first time window. In other words, the start moment of the first time window is located in the (k+1)^{th} slot. The offset value k of the first time window may be related to one or more pieces of the following information: duration for which the terminal device demodulates the first message and duration for which the first terminal prepares the first data. A value of duration for which the terminal device demodulates the first message may be k1, and k may be greater than or equal to k1. In this way, the first terminal may prepare the first data before receiving the first message. In addition, due to different capabilities of the terminal devices, duration for which the terminal devices demodulate the first message may also be different. Therefore, optionally, the value of k may be determined based on longest duration k2 required by the first terminal device and the second terminal device to demodulate the first message, to ensure that all terminal devices can accurately demodulate the first message, k is a positive integer. Optionally, the first terminal device and/or the at least one second terminal device may report duration required by the first terminal device and/or the at least one second terminal device to demodulate the first message. For example, the first terminal device and/or the at least one second terminal device perform/performs reporting when initially accessing the network device. The duration L of the first time window may be related to a size of the first data to be sent by the first terminal device, and an end moment of the first time window may be earlier than a first uplink transmission resource. Optionally, the duration L of the first time window may be in a unit of a millisecond (millisecond, ms), a slot (slot), a symbol (symbol), or the like. Similar to the first message, the second message may be used to indicate a second configuration parameter. The second configuration parameter includes an offset value of the start moment of the first time window relative to a receiving moment of the second message and the duration of the first time window. The at least one second terminal device may determine the first time window based on the first configuration parameter. If the network device sends the first message and the second message at a same moment (for example, in a same slot), the first terminal device and the at least one second terminal device may respectively receive the first message and the second message at a same moment, and start moments that are of the first time window and that are determined by the first terminal device and the at least one second terminal device are the same.

When the first time window is indicated in an implicit manner, the start moment of the first time window may be k slots after the first message is received, and the end moment of the first time window may be a start moment of the first uplink transmission resource. After receiving the first message, the first terminal device may determine the start moment and the end moment of the first time window. The first uplink transmission resource may be an uplink transmission resource (for example, a PUSCH resource) allocated by the Uu grant message. The value of k may be preconfigured in the first terminal device and the at least one second terminal device, or the value of k is indicated by using RRC signaling. For example, the network device sends first RRC signaling to the first terminal device. The first RRC signaling includes the value of k, or the first RRC signaling includes information about an indication used to determine k. After receiving the first RRC signaling, the first terminal device determines the start moment of the first time window, and the start moment is k slots after the first message is received. Optionally, the value of k may be equal to a value of k2. Similar to the first message, after receiving the second message, the at least one second terminal device may determine a start moment and an end moment of the first time window. The start moment of the first time window may be k slots after the second message is received, and the end moment of the first time window may be the start moment of the first uplink transmission resource. The value of k may be preconfigured in the at least one second terminal device, or the value of k is indicated by using RRC signaling. For example, the network device sends second RRC signaling to the at least one second terminal device. The second RRC signaling includes the value of k, or the second RRC signaling includes information about the indication used to determine k.

Optionally, the first message may further include at least one piece of identification information. The at least one first transmission resource belongs to a sidelink transmission resource identified by the at least one piece of identification information. In other words, the network device may indicate, by using the first message, a specific preconfigured sidelink transmission resource/specific preconfigured sidelink transmission resources on which the first terminal device sends the data. Optionally, the second message may further include at least one piece of identification information. The network device may indicate, by using the second message, a specific preconfigured sidelink transmission resource/specific preconfigured sidelink transmission resources on which the at least one second terminal device receives the data. If the first message does not include the at least one piece of identification information, the first terminal device may select a sidelink transmission resource closest to the start moment of the first time window, or the first terminal device may select any (one or more) sidelink transmission resources.

S403: The first terminal device sends the first data to at least one second terminal device in the first time window, and the at least one second terminal device receives the first data in the first time window.

If all transmission resources in the first time window are activated, the first terminal device sends the first data on all transmission resources in the first time window. Correspondingly, the at least one second terminal device may receive the first data on all the transmission resources in the first time window.

If a part of transmission resources in the first time window are activated, for example, at least one first transmission resource is activated, the first terminal device may send the first data on the at least one first transmission resource in the first time window. The at least one second terminal device may receive the first data on the at least one first transmission resource in the first time window (if a periodic sidelink transmission resource that is the same as that of the first terminal device is preconfigured in the second terminal device), or the at least one second terminal device may blindly detect the first data in the first time window (if no periodic sidelink transmission resource that is the same as that of the first terminal device is configured in the at least one second terminal device).

Optionally, the first terminal device may send the first data on the at least one first transmission resource that belongs to the sidelink transmission resource identified by the at least one piece of identification information. For example, the CG #1, the CG #2, and the CG #3 are preconfigured in the first terminal device. The at least one piece of identification information included in the first message is the CG #1. The terminal device sends the first data on at least one first transmission resource that is in the first time window and that belongs to the CG #1. Correspondingly, if a same periodic sidelink transmission resource is preconfigured in the at least one second terminal device, the at least one second terminal device may further receive the first data on at least one first transmission resource that is in the first time window and that belongs to the CG #1. For another example, if the at least one piece of identification information included in the first message is the CG #1 and the CG #2, the terminal device may send the first data on at least one first transmission resource that is in the first time window and that belongs to the CG #1 and the CG #2, or the terminal device may send the first data on at least one first transmission resource that is in the first time window and that belongs to the CG #1 or the CG #2.

The first data may be carried by using a physical sidelink control channel (physical sidelink control channel, PSCCH).

A possible scenario is shown in FIG. 6. The CG #1, the CG #2, and the CG #3 are preconfigured in the first terminal device. In FIG. 6, the CG #1 includes a first transmission resource 11, a first transmission resource 12, and a first transmission resource 13. The CG #2 includes a first transmission resource 21, a first transmission resource 22, and a first transmission resource 23. The CG #3 includes a first transmission resource 31 and a first transmission resource 32. No CG resource is configured in the at least one second terminal device. The network device sends the Uu grant message to the first terminal device. The Uu grant message includes 1-bit indication information, and the Uu grant message is used to configure a PUSCH resource. The first terminal device receives a last symbol of the Uu grant message at a moment t61, determines that a moment t62 that is k slots after the moment t61 is the start moment of the first time window, and determines that a start moment t63 of the PUSCH resource is the end moment of the first time window. The first terminal device may select a CG resource that is closest to the moment that is k slots after the Uu grant message is received, that is, the CG #1. A first transmission resource that is of the CG #1 and that is in the first time window is the first transmission resource 12. The first terminal device sends the first data on the first transmission resource 12. The network device may also send the Uu grant message to the at least one second terminal device, and the at least one second terminal device may also receive the last symbol of the Uu grant message at the moment t61, determine that the moment t62 that is k slots after the moment t61 is the start moment of the first time window, and determine that the start moment t63 of the PUSCH resource is the end moment of the first time window. Because no CG resource is configured in the at least one second terminal device, the at least one second terminal device blindly detects the first data in the first time window.

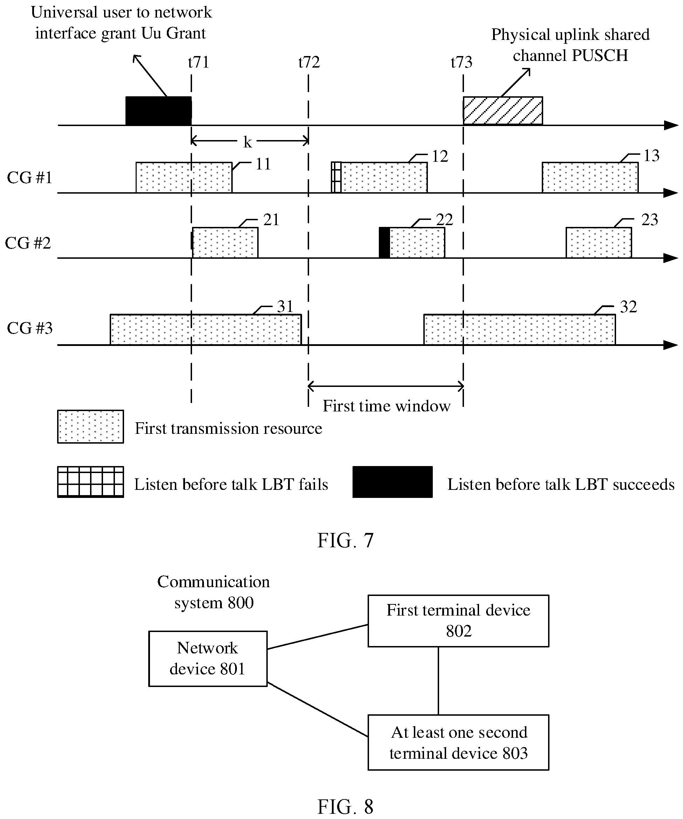

In another possible scenario, as shown in FIG. 7, the first terminal device works on an unlicensed frequency band. In other words, the preconfigured sidelink transmission resource in the first terminal device is a resource on the unlicensed frequency band. Similar to FIG. 6, the CG #1, the CG #2, and the CG #3 are preconfigured in the first terminal device. In FIG. 7, the CG #1 includes a first transmission resource 11, a first transmission resource 12, and a first transmission resource 13. The CG #2 includes a first transmission resource 21, a first transmission resource 22, and a first transmission resource 23. The CG #3 includes a first transmission resource 31 and a first transmission resource 32. No CG resource is configured in the at least one second terminal device. The network device sends the Uu grant message to the first terminal device. The Uu grant message includes 1-bit indication information, and the Uu grant message is used to configure a PUSCH resource. The first terminal device receives a last symbol of the Uu grant message at a moment t71, determines that a moment t72 that is k slots after the moment t71 is the start moment of the first time window, and determines that a start moment t73 of the PUSCH resource is the end moment of the first time window. However, in FIG. 7, because the first terminal device operates on an unlicensed frequency band, the first terminal device may perform LBT. The first terminal device may separately attempt to perform channel listening on the at least one first transmission resource in the first time window. The first terminal device sends the first data to the at least one second terminal device on an idle first transmission resource in the first time window, but cannot send the data on an occupied first transmission resource. Optionally, the idle first transmission resource is a first transmission resource on which LBT succeeds. For example, in FIG. 7, the first terminal fails to perform LBT on the first transmission resource 12 of the CG #1, and the first terminal device continues to perform LBT on the first transmission resource 22 of the CG #2. In this way, a plurality of LBT opportunities can be provided for the first terminal device, a success rate of sending data by the first terminal device is improved, and data sending reliability is ensured. Because no CG resource is configured in the at least one second terminal device, the at least one second terminal device blindly detects the first data in the first time window.

S404: The at least one second terminal device sends the first data on the first uplink transmission resource, and the network device may receive the first data from the at least one second terminal device.

S405: The first terminal device sends second data on the first uplink transmission resource, and the network device may receive the second data from the first terminal device.

The first data is data on which cooperation transmission is performed. Content of the first data may be the same as or different from content of the second data.

Optionally, the first uplink transmission resource is a PUSCH resource scheduled by the network device by using a Uu grant message.

In an unlicensed scenario, due to uncertainty of channel access, the second terminal device may not successfully receive the first data. In other words, the at least one second terminal device may successfully receive the first data, or the at least one second terminal device may not successfully receive the first data. If the at least one second terminal device successfully receives the first data, the at least one second terminal device may send the first data to the network device on the first uplink transmission resource. Optionally, if the at least one second terminal device fails to receive the first data, that is, the at least one second terminal device fails to receive the first data, the at least one second terminal device may not send the first data on the first uplink transmission resource, or the at least one second terminal device sends a negative acknowledgment (NACK) message to the network device. After determining that the at least one second terminal device fails to receive the first data, the network device may re-schedule the first uplink transmission resource (for example, the network device re-sends the Uu grant message, the first terminal device re-sends the first data, and the at least one second terminal device re-receives the first data), until the at least one second terminal device successfully receives the first data, or the network device receives the first data from the at least one second terminal device.

Optionally, on the first uplink transmission resource, if the first terminal device cannot send all data required during cooperation transmission to the at least one second terminal device, the first terminal device may request the network device to re-schedule the first uplink transmission resource until the first terminal device sends all data required during cooperation transmission to the at least one second terminal device.

According to the resource scheduling method provided in this embodiment of this application, the SUE may send the data in the first time window, and the first time window may be dynamically configured, so that occupation and a waste of transmission resources can be reduced, and flexibility of resource scheduling can be improved. Optionally, the transmission resource outside the first time window is in the inactive state, is not used for data sending between terminal devices, and may be used for another purpose, so that occupation and a waste of transmission resources can be reduced. For example, the network device may activate a part of the periodic sidelink transmission resources (the part of resources are aperiodic sidelink transmission resources) at a time based on a service requirement, so that occupation and a waste of transmission resources are reduced. Especially for aperiodic and burst data transmission, occupation and a waste of transmission resources can be reduced. Optionally, the CUE may not receive data on the transmission resource outside the first time window, so that receiving power consumption of the CUE is reduced. Optionally, the network device does not need to additionally send a transmission resource deactivation instruction, so that signaling overheads can be further reduced, and flexibility of transmission resource scheduling can be further improved. If the first message is sent by using a DCI message, efficiency of transmission resource scheduling can be further improved, and flexibility of transmission resource scheduling can be further improved.

Based on a same technical concept as the foregoing resource scheduling method, an embodiment of this application further provides a communication system. As shown in FIG. 8, the communication system 800 includes a network device 801, a first terminal device 802, and at least one second terminal device 803. The network device 801, the first terminal device 802, and the at least one second terminal device 803 may implement the methods described in the foregoing method embodiments.

For example, the network device 801 is configured to: send a first message to the first terminal device, where the first message indicates a first time window; and send a second message to the at least one second terminal device, where the second message indicates the first time window.

The first terminal device 802 is configured to receive the first message, and send first data to the at least one second terminal device 803 on at least one first transmission resource in the first time window. The at least one first transmission resource is a resource in a preconfigured sidelink transmission resource.

The at least one second terminal device 803 is configured to receive the second message, and receive the first data in the first time window.

In an implementation, a start moment of the first time window is k slots after the first message or the second message is received. An end moment of the first time window is before a first uplink transmission resource. The first uplink transmission resource is used by the first terminal device 802 to send second data to the network device 801, and/or the first uplink transmission resource is used by the at least one second terminal device 803 to send the first data to the network device 801. k is a positive integer.

In an implementation, a value of k is indicated by using RRC signaling.

In an implementation, the first message may further indicate a first configuration parameter. The first configuration parameter includes an offset value of a start moment of the first time window relative to a receiving moment of the first message and duration of the first time window. The second message further indicates a second configuration parameter. The second configuration parameter includes an offset value of the start moment of the first time window relative to a receiving moment of the second message and the duration of the first time window.

In an implementation, the first terminal device 802 is configured to perform channel listening on the at least one first transmission resource, and send the first data to the at least one second terminal device 803 on an idle first transmission resource detected through listening on the at least one first transmission resource.

In an implementation, the idle first transmission resource detected through listening is a first transmission resource on which LBT succeeds.

In an implementation, the first message includes at least one piece of identification information, and the at least one first transmission resource is a resource in a sidelink transmission resource identified by the at least one piece of identification information.

In an implementation, the first terminal device 802 is further configured to send second data on the first uplink transmission resource.

The at least one second terminal device 803 is further configured to send the first data on the first uplink transmission resource.

The network device 801 is further configured to receive, on the first uplink transmission resource, the second data from the first terminal device 802 and/or the first data from the at least one second terminal device 803.

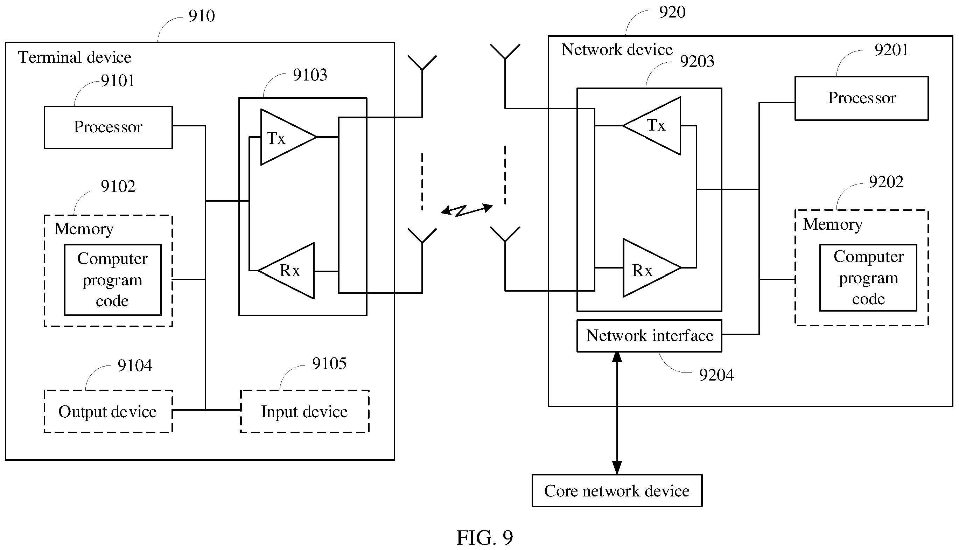

Optionally, FIG. 9 shows a schematic diagram of structures of a terminal device 910 and a network device 920 according to an embodiment of this application. The terminal device 910 includes a first terminal device and/or at least one second terminal device. FIG. 9 does not show a schematic diagram of structures of the first terminal device and the at least one second terminal device. The network device 920 may be an access network device.

The terminal device 910 includes at least one processor (an example in which one processor 9101 is included is used for description in FIG. 9) and at least one transceiver (an example in which one transceiver 9103 is included is used for description in FIG. 9). Optionally, the terminal device 910 may further include at least one memory (an example in which one memory 9102 is included is used for description in FIG. 9), at least one output device (an example in which one output device 9104 is included is used for description in FIG. 9), and at least one input device (an example in which one input device 9105 is included is used for description in FIG. 9).

The processor 9101, the memory 9102, and the transceiver 9103 are connected to each other through a communication line. The communication line may include a path for transmitting information among the foregoing components.

The processor 9101 may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor 9101 may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be in a storage medium, and the storage medium is located in the memory 9102.

The memory 9102 may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and method described in this specification includes but is not limited to these and any other proper types of memories. The memory may exist independently and is connected to the processor through the communication line. Alternatively, the memory may be integrated with the processor.

The memory 9102 is configured to store computer-executable instructions for executing the solutions of this application, and the processor 9101 controls the execution. The processor 9101 is configured to execute the computer-executable instructions stored in the memory 9102, to implement a resource scheduling method provided in the following embodiments of this application.

Optionally, the computer-executable instruction in this embodiment of this application may also be referred to as application program code or computer program code. This is not specifically limited in this embodiment of this application.

The output device 9104 communicates with the processor 9101, and may display information in a plurality of manners. For example, the output device 9104 may be a liquid crystal display (liquid crystal display, LCD), a light emitting diode (light emitting diode, LED) display device, a cathode ray tube (cathode ray tube, CRT) display device, or a projector (projector). The input device 9105 communicates with the processor 9101, and may receive user input in a plurality of manners. For example, the input device 9105 may be a mouse, a keyboard, a touchscreen device, a sensing device, or the like.

The transceiver 9103 may be any apparatus of a transceiver type, and is configured to communicate with another device or a communication network, for example, the Ethernet, a radio access network (radio access network, RAN), or a wireless local area network (wireless local area network, WLAN). The transceiver 9103 includes a transmitter (transmitter, Tx) and a receiver (receiver, Rx).

The memory 9102 may exist independently, and is connected to the processor 9101 through the communication line. Alternatively, the memory 9102 may be integrated with the processor 9101.

The memory 9102 is configured to store computer-executable instructions for executing the solutions of this application, and the processor 9101 controls the execution. Specifically, the processor 9101 is configured to execute the computer-executable instructions stored in the memory 9102, to implement the resource scheduling method provided in embodiments of this application.

Alternatively, optionally, in this embodiment of this application, the processor 9101 may perform a function related to processing in the signal generation method provided in the following embodiments of this application. The transceiver 9103 is responsible for communicating with another device or a communication network. This is not specifically limited in this embodiment of this application.

The network device 920 includes at least one processor (an example in which one processor 9201 is included is used for description in FIG. 9), at least one transceiver (an example in which one transceiver 9203 is included is used for description in FIG. 9), and at least one network interface (an example in which one network interface 9204 is included is used for description in FIG. 9). Optionally, the network device 920 may further include at least one memory (an example in which one memory 9202 is included is used for description in FIG. 9). The processor 9201, the memory 9202, the transceiver 9203, and the network interface 9204 are connected through a communication line. The network interface 9204 is configured to connect to a core network device through a link (for example, an S1 interface), or connect to a network interface of another network device through a wired or wireless link (for example, an X2 interface) (not shown in FIG. 9). This is not specifically limited in embodiments of this application. In addition, descriptions about the processor 9201, the memory 9202, and the transceiver 9203 may refer to descriptions about the processor 9101, the memory 9102, and the transceiver 9103 in the terminal device 910. Details are not described again herein.

It can be understood that the structures shown in FIG. 9 do not constitute a specific limitation on the terminal device 910 and the network device 920. For example, in some other embodiments of this application, the terminal device 910 or the network device 920 may include more or fewer parts than those shown in the figure, or some parts may be combined, or some parts may be split, or a different part arrangement may be used. The parts shown in the figure may be implemented in hardware, software, or a combination of software and hardware.

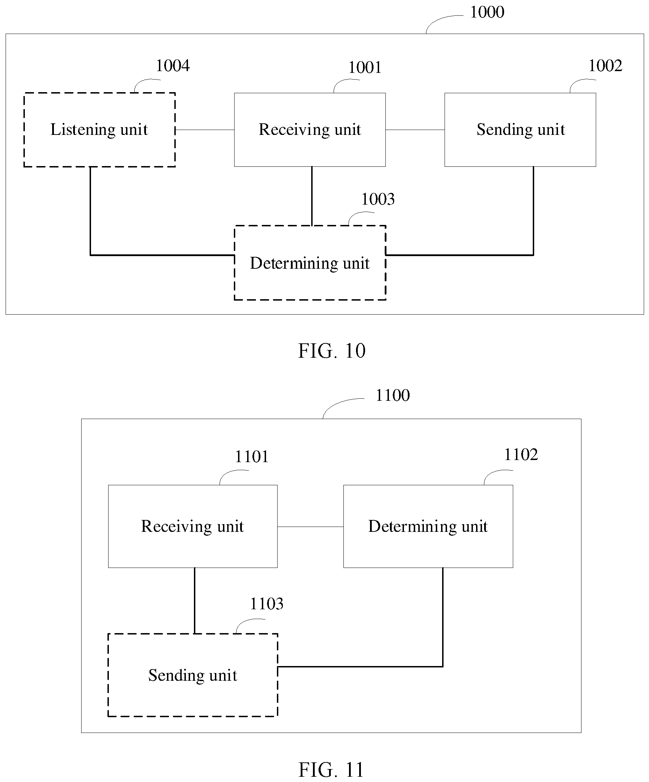

Based on a same technical concept as the foregoing resource scheduling method, an embodiment of this application further provides a communication apparatus. As shown in FIG. 10, the communication apparatus 1000 includes a receiving unit 1001 and a sending unit 1002. The communication apparatus 1000 may be configured to implement the methods described in the foregoing method embodiments. The apparatus 1000 is applied to a first terminal device. The first terminal device may be SUE.

Specifically, the receiving unit 1001 is configured to receive a first message. The first message indicates a first time window.

The sending unit 1002 is further configured to send first data to at least one second terminal device on at least one first transmission resource in the first time window. The at least one first transmission resource is a resource in a preconfigured sidelink transmission resource.

In an implementation, a start moment of the first time window is k slots after the first message is received. An end moment of the first time window is before a first uplink transmission resource. The first uplink transmission resource is used by the first terminal device to send second data to a network device. k is a positive integer.

In an implementation, a value of k is indicated by using RRC signaling.

In an implementation, the first message further indicates a first configuration parameter. The first configuration parameter includes an offset value of a start moment of the first time window relative to a receiving moment of the first message and duration of the first time window.

In an implementation, the communication apparatus may further include a determining unit 1003 configured to determine the start moment and an end moment of the first time window.

In an implementation, the communication apparatus may further include a listening unit 1004 configured to perform channel listening on the at least one first transmission resource.

The sending unit 1002 is further configured to send the first data to the at least one second terminal device on an idle first transmission resource detected through listening on the at least one first transmission resource.

In an implementation, the idle first transmission resource detected through listening is a first transmission resource on which LBT succeeds.

In an implementation, the first message includes at least one piece of identification information, and the at least one first transmission resource is a resource in a sidelink transmission resource identified by the at least one piece of identification information.

In an implementation, the sending unit 1002 is further configured to send the second data to the network device on the first uplink transmission resource.

As shown in FIG. 11, a communication apparatus 1100 includes a receiving unit 1101 and a determining unit 1102. The communication apparatus 1100 may be configured to implement the methods described in the foregoing method embodiments. The apparatus 1100 is applied to a second terminal device. The second terminal device may be CUE.

Specifically, the receiving unit 1101 is configured to receive a second message. The first message indicates a first time window.

The determining unit 1102 is configured to determine the second message.

The receiving unit 1101 is further configured to receive first data from a first terminal device in the first time window.

In an implementation, a start moment of the first time window is k slots after the second message is received. An end moment of the first time window is before a first uplink transmission resource. The first uplink transmission resource is used by the second terminal device to send the first data to a network device. k is a positive integer.

In an implementation, a value of k is indicated by using RRC signaling.

In an implementation, the second message may further indicate a second configuration parameter. The second configuration parameter includes an offset value of a start moment of the first time window relative to a receiving moment of the second message and duration of the first time window.

In an implementation, the determining unit 1102 is further configured to determine the start moment and an end moment of the first time window.

In an implementation, the communication apparatus may further include a sending unit 1103 configured to send the first data to the network device on the second uplink transmission resource.

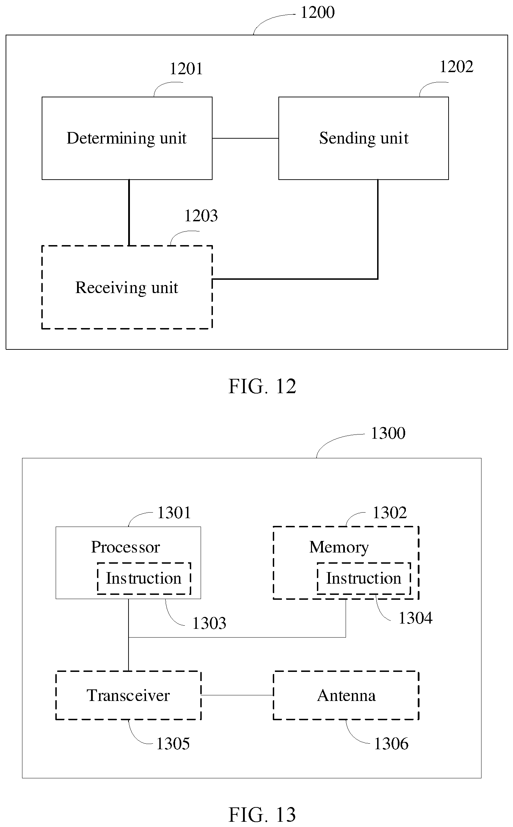

As shown in FIG. 12, a communication apparatus 1200 includes a determining unit 1201 and a sending unit 1202. The communication apparatus 1200 may be configured to implement the methods described in the foregoing method embodiments. The apparatus 1200 is applied to a network device.

Specifically, the determining unit 1201 is configured to: determine a first message, where the first message indicates a first time window; and determine a second message, where the second message indicates the first time window.

The sending unit 1202 is configured to send the first message to a first terminal device, and send the second message to at least one second terminal device.

The first time window is used by the first terminal device to send first data to the at least one second terminal device on at least one first transmission resource in the first time window, and the at least one first transmission resource is a resource in a preconfigured sidelink transmission resource; and/or the first time window indicates the at least one second terminal device to receive the first data from the first terminal device in the first time window.

In an implementation, a start moment of the first time window is k slots after the first message or the second message is sent. An end moment of the first time window is before a first uplink transmission resource. The first uplink transmission resource is used by the network device to receive second data from the first terminal device and/or the first data from the at least one second terminal device, k is a positive integer.

In an implementation, a value of k is indicated by using RRC signaling.

In an implementation, the first message further includes a first configuration parameter. The first configuration parameter includes an offset value of a start moment of the first time window relative to a receiving moment of the first message and duration of the first time window.

The second message further indicates a second configuration parameter. The second configuration parameter includes an offset value of the start moment of the first time window relative to a receiving moment of the second message and the duration of the first time window.

In an implementation, the first message includes at least one piece of identification information. The at least one first transmission resource belongs to a sidelink transmission resource identified by the at least one piece of identification information.

In an implementation, the communication apparatus may further include a receiving unit 1203 configured to receive, on the first uplink transmission resource, the second data from the first terminal device and/or the first data from the at least one second terminal device.

It should be noted that in embodiments of this application, division into modules is an example, and is only a logical function division. In actual implementation, there may be another division manner. In addition, function units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, a network device, or the like) or a processor (processor) to perform all or some of the steps of the methods described in embodiments of this application.

For example FIG. 13 is a schematic diagram of a structure of a communication apparatus 1300 according to an embodiment of this application. The apparatus 1300 may be configured to implement the methods described in the foregoing method embodiments. For details, refer to the descriptions in the foregoing method embodiments.

The communication apparatus 1300 includes one or more processors 1301. The processor 1301 may be a general-purpose processor, a dedicated processor, or the like. For example, the processor 1301 may be a baseband processor or a central processing unit. The baseband processor may be configured to process a communication protocol and communication data. The central processing unit may be configured to control a communication apparatus (for example, a base station, a terminal, or a chip), execute a software program, and process data of the software program. The communication apparatus may include a transceiver unit configured to implement signal input (receiving) and output (sending). For example, the transceiver unit may be a transceiver, a radio frequency chip, or the like.

The communication apparatus 1300 includes one or more processors 1301, and the one or more processors 1301 may implement the methods in the foregoing embodiments.

Optionally, the processor 1301 may further implement another function in addition to the methods in the foregoing embodiments.

Optionally, in a design, the processor 1301 may execute instructions, so that the apparatus 1300 performs the methods described in the foregoing method embodiments. All or a part of the instructions, for example, an instruction 1303, may be stored in the processor. Alternatively, all or a part of the instructions, for example, an instruction 1304, may be stored in a memory 1302 coupled to the processor. Alternatively, the apparatus 1300 may be enabled, by using both the instruction 1303 and the instruction 1304, to perform the methods described in the foregoing method embodiments. The instruction 1303 is also referred to as a computer program.

In another possible design, the communication apparatus 1300 may further include a circuit, and the circuit can implement functions in the foregoing method embodiments.

In another possible design, the apparatus 1300 may include one or more memories 1302. An instruction 1304 is stored in the memory 1302. The instruction may be run on the processor, so that the apparatus 1300 performs the methods described in the foregoing method embodiments. Optionally, the memory may further store data. Optionally, the processor may also store instructions and/or data. For example, the one or more memories 1302 may store the correspondence described in the foregoing embodiments, or the related parameter or table in the foregoing embodiments. The processor and the memory may be separately disposed, or may be integrated together.

In another possible design, the apparatus 1300 may further include a transceiver 1305 and an antenna 1306. The processor 1301 may be referred to as a processing unit, and controls the apparatus (a terminal or a base station). The transceiver 1305 may be referred to as a transceiver machine, a transceiver circuit, a transceiver unit, or the like, and is configured to implement a transceiver function of the apparatus by using the antenna 1306.

An embodiment of this application further provides a computer-readable medium. The computer-readable medium stores a computer program. When the computer program is executed by a computer, the data sending method, the data receiving method, and the resource indication method in any one of the foregoing method embodiments are implemented.

An embodiment of this application further provides a computer program product, and the computer program product includes a computer program. When the computer program is executed by a computer, the data sending method, the data receiving method, and the resource indication method in any one of the foregoing method embodiments are implemented.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be the foregoing communication apparatus. The computer instruction may be stored in a computer-readable storage medium, or transmitted from one computer-readable storage medium to another computer-readable storage medium. The computer-readable storage medium may be the foregoing storage medium or the foregoing memory.

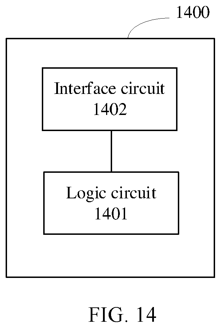

In a possible design, when the communication apparatus is a chip, for example, a chip in a network device, or a chip in a terminal device, a determining unit or a processor 1301 may be one or more logic circuits, and a sending unit, a receiving unit, or a transceiver 1305 may be an input/output interface, or also referred to as a communication interface, an interface circuit, an interface, or the like. Alternatively, the transceiver 1305 may be a sending unit and a receiving unit. The sending unit may be an output interface, the receiving unit may be an input interface, and the sending unit and the receiving unit are integrated in one device, such as an input/output interface. As shown in FIG. 14, a communication apparatus 1400 shown in FIG. 14 includes a logic circuit 1401 and an interface circuit 1402. That is, the foregoing determining unit or processor 1301 may be implemented by using the logic circuit 1401, and the sending unit, the receiving unit, or the transceiver 1305 may be implemented by using the interface circuit 1402. The logic circuit 1401 may be a chip, a processing circuit, an integrated circuit, a system on a chip (system on a chip, SoC) chip, or the like. The interface circuit 1402 may be a communication interface, an input-output interface, or the like. In this embodiment of this application, the logic circuit and the interface circuit may also be coupled to each other. Specific connection manners of the logic circuit and the interface circuit are not limited in this embodiment of this application.

In some embodiments of this application, the logic circuit and the interface circuit may be configured to perform a function, an operation, or the like performed by the foregoing network device or terminal device.

For example, the interface circuit 1402 is configured to receive a first message, and send first data to at least one second terminal device on at least one first transmission resource in a first time window.

The logic circuit 1401 is configured to determine a start moment and an end moment of the first time window.

For functions or operations performed by the network device or the terminal device, refer to the foregoing method embodiments. Details are not described herein again.

A person of ordinary skill in the art may be aware that, in combination with examples described in embodiments disclosed in this specification, units and algorithm steps can be implemented by electronic hardware, computer software, or a combination thereof. To clearly describe the interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, or may be electrical connections, mechanical connections, or connections in other forms.

The units described as separate parts may or may not be physically separated, and the parts displayed as units may or may not be physical units, may be located in one position, or may be distributed on a plurality of network units. Some or all of the units may be selected based on actual requirements to achieve objectives of solutions of embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any usable medium accessible by a computer.

In summary, what is described above is merely embodiments of the technical solutions of this application, but is not intended to limit the protection scope of this application. Any modification, equivalent replacement, and improvement made without departing from the principle of this application shall fall within the protection scope of this application.

## Claims

1. A data sending method, comprising:
receiving, by a first terminal device, a first message, wherein the first message indicates a first time window; and
sending, by the first terminal device, first data to at least one second terminal device on at least one first transmission resource in the first time window, wherein the at least one first transmission resource is a resource in a preconfigured sidelink transmission resource.

2. The method according to claim 1, wherein a start moment of the first time window is k slots after the first message is received, an end moment of the first time window is before a first uplink transmission resource, the first uplink transmission resource is used by the first terminal device to send second data to a network device, and k is a positive integer.

3. The method according to claim 2, wherein a value of k is indicated by using radio resource control RRC signaling.

4. The method according to claim 1, wherein the first message further indicates a first configuration parameter, and the first configuration parameter comprises an offset value of a start moment of the first time window relative to a receiving moment of the first message and duration of the first time window.

5. The method according to claim 4, wherein after the receiving, by a first terminal device, a first message, the method further comprises:
determining, by the first terminal device, the start moment and an end moment of the first time window.

6. The method according to any one of claims 1 to 5, wherein the sending, by the first terminal device, the first data to the at least one second terminal device on the at least one first transmission resource in the first time window comprises:
performing, by the first terminal device, channel listening on the at least one first transmission resource; and
sending, by the first terminal device, the first data to the at least one second terminal device on an idle first transmission resource detected through listening on the at least one first transmission resource.

7. The method according to claim 6, wherein the idle first transmission resource detected through listening is a first transmission resource on which listen before talk LBT succeeds.

8. The method according to any one of claims 1 to 7, wherein the first message comprises at least one piece of identification information, and the at least one first transmission resource is a resource in a sidelink transmission resource identified by the at least one piece of identification information.

9. The method according to claim 2, wherein the method further comprises:
sending, by the first terminal device, the second data to the network device on the first uplink transmission resource.

10. A data receiving method, comprising:
receiving, by a second terminal device, a second message, wherein the second message indicates a first time window; and
receiving, by the second terminal device, first data from a first terminal device in the first time window.

11. The method according to claim 10, wherein a start moment of the first time window is k slots after the second message is received, an end moment of the first time window is before a first uplink transmission resource, the first uplink transmission resource is used by the second terminal device to send the first data to a network device, and k is a positive integer.

12. The method according to claim 11, wherein a value of k is indicated by using radio resource control RRC signaling.

13. The method according to claim 10, wherein the second message further indicates a second configuration parameter, and the second configuration parameter comprises an offset value of a start moment of the first time window relative to a receiving moment of the second message and duration of the first time window.

14. The method according to claim 13, wherein after the receiving, by a second terminal device, a second message, the method further comprises:
determining, by the second terminal device, the start moment and an end moment of the first time window.

15. The method according to claim 11, wherein the method further comprises:
sending, by the second terminal device, the first data to the network device on the first uplink transmission resource.

16. A resource indication method, comprising:
sending, by a network device, a first message to a first terminal device, wherein the first message indicates a first time window; and
sending, by the network device, a second message to at least one second terminal device, wherein the second message indicates the first time window, wherein
the first time window is used by the first terminal device to send first data to the at least one second terminal device on at least one first transmission resource in the first time window, and the at least one first transmission resource is a resource in a preconfigured sidelink transmission resource; or the first time window is used by the at least one second terminal device to receive the first data in the first time window.

17. The method according to claim 16, wherein a start moment of the first time window is k slots after the first message or the second message is sent, an end moment of the first time window is before a first uplink transmission resource, the first uplink transmission resource is used by the network device to receive second data from the first terminal device and the first data from the at least one second terminal device, and k is a positive integer.

18. The method according to claim 17, wherein a value of k is indicated by using radio resource control RRC signaling.

19. The method according to claim 16, wherein the first message further indicates a first configuration parameter, and the first configuration parameter comprises an offset value of a start moment of the first time window relative to a receiving moment of the first message and duration of the first time window; and
the second message further indicates a second configuration parameter, and the second configuration parameter comprises an offset value of the start moment of the first time window relative to a receiving moment of the second message and the duration of the first time window.

20. The method according to any one of claims 16 to 19, wherein the first message comprises at least one piece of identification information, and the at least one first transmission resource is a resource in a sidelink transmission resource identified by the at least one piece of identification information.

21. The method according to claim 17, wherein the method further comprises:
receiving, by the network device on the first uplink transmission resource, the second data from the first terminal device and/or the first data from the at least one second terminal device.

22. A communication system, wherein the communication system comprises a network device, a first terminal device, and at least one second terminal device, wherein
the network device is configured to: send a first message to the first terminal device, wherein the first message indicates a first time window; and send a second message to the at least one second terminal device, wherein the second message indicates the first time window;
the first terminal device is configured to receive the first message, and send first data to the at least one second terminal device on at least one first transmission resource in the first time window, wherein the at least one first transmission resource is a resource in a preconfigured sidelink transmission resource; and
the at least one second terminal device is configured to receive the second message, and receive the first data in the first time window.

23. The system according to claim 22, wherein a start moment of the first time window is k slots after the first message or the second message is received, an end moment of the first time window is before a first uplink transmission resource, the first uplink transmission resource is used by the first terminal device to send second data to the network device, the first uplink transmission resource is used by the at least one second terminal device to send the first data to the network device, and k is a positive integer.

24. The system according to claim 23, wherein a value of k is indicated by using radio resource control RRC signaling.

25. The system according to claim 22, wherein the first message further indicates a first configuration parameter, and the first configuration parameter comprises an offset value of a start moment of the first time window relative to a receiving moment of the first message and duration of the first time window; and
the second message further indicates a second configuration parameter, and the second configuration parameter comprises an offset value of the start moment of the first time window relative to a receiving moment of the second message and the duration of the first time window.

26. The system according to any one of claims 22 to 25, wherein the first terminal device is configured to perform channel listening on the at least one first transmission resource, and send the first data to the at least one second terminal device on an idle first transmission resource detected through listening on the at least one first transmission resource.

27. The system according to claim 26, wherein the idle first transmission resource detected through listening is a first transmission resource on which listen before talk LBT succeeds.

28. The system according to any one of claims 22 to 27, wherein the first message comprises at least one piece of identification information, and the at least one first transmission resource is a resource in a sidelink transmission resource identified by the at least one piece of identification information.

29. The system according to claim 23, wherein the first terminal device is further configured to send the second data on the first uplink transmission resource;
the at least one second terminal device is further configured to send the first data on the first uplink transmission resource; and
the network device is further configured to receive, on the first uplink transmission resource, the second data from the first terminal device and/or the first data from the at least one second terminal device.

30. A communication apparatus, comprising:
a receiving unit, configured to receive a first message, wherein the first message indicates a first time window; and
a sending unit, further configured to send first data to at least one second terminal device on at least one first transmission resource in the first time window, wherein the at least one first transmission resource is a resource in a preconfigured sidelink transmission resource.

31. The apparatus according to claim 30, wherein a start moment of the first time window is k slots after the first message is received, an end moment of the first time window is before a first uplink transmission resource, the first uplink transmission resource is used by the communication apparatus to send second data to a network device, and k is a positive integer.

32. The apparatus according to claim 31, wherein a value of k is indicated by using radio resource control RRC signaling.

33. The apparatus according to claim 30, wherein the first message further indicates a first configuration parameter, and the first configuration parameter comprises an offset value of a start moment of the first time window relative to a receiving moment of the first message and duration of the first time window.

34. The apparatus according to claim 33, wherein the communication apparatus further comprises:
a determining unit, configured to determine the start moment and an end moment of the first time window.

35. The apparatus according to any one of claims 30 to 34, wherein the communication apparatus further comprises:
a listening unit, configured to perform channel listening on the at least one first transmission resource, wherein
the sending unit is further configured to send the first data to the at least one second terminal device on an idle first transmission resource detected through listening on the at least one first transmission resource.

36. The apparatus according to claim 35, wherein the idle first transmission resource detected through listening is a first transmission resource on which listen before talk LBT succeeds.

37. The apparatus according to any one of claims 30 to 36, wherein the first message comprises at least one piece of identification information, and the at least one first transmission resource is a resource in a sidelink transmission resource identified by the at least one piece of identification information.

38. The apparatus according to claim 31, wherein the sending unit is further configured to send the second data to the network device on the first uplink transmission resource.

39. A communication apparatus, comprising:
a receiving unit, configured to receive a second message, wherein the first message indicates a first time window; and
a determining unit, configured to determine the second message, wherein
the receiving unit is further configured to receive first data from a first terminal device in the first time window.

40. The apparatus according to claim 39, wherein a start moment of the first time window is k slots after the second message is received, an end moment of the first time window is before a first uplink transmission resource, the first uplink transmission resource is used by the communication apparatus to send the first data to a network device, and k is a positive integer.

41. The apparatus according to claim 40, wherein a value of k is indicated by using radio resource control RRC signaling.

42. The apparatus according to claim 39, wherein the second message further indicates a second configuration parameter, and the second configuration parameter comprises an offset value of a start moment of the first time window relative to a receiving moment of the second message and duration of the first time window.

43. The apparatus according to claim 42, wherein the determining unit is further configured to determine the start moment and an end moment of the first time window.

44. The apparatus according to claim 40, wherein the communication apparatus further comprises:
a sending unit, configured to send the first data to the network device on the second uplink transmission resource.

45. A communication apparatus, comprising:
a determining unit, configured to: determine a first message, wherein the first message indicates a first time window; and determine a second message, wherein the second message indicates the first time window; and
a sending unit, configured to send the first message to a first terminal device, and send the second message to at least one second terminal device, wherein
the first time window is used by the first terminal device to send first data to the at least one second terminal device on at least one first transmission resource in the first time window, and the at least one first transmission resource is a resource in a preconfigured sidelink transmission resource; or the first time window is used by the at least one second terminal device to receive the first data in the first time window.

46. The apparatus according to claim 45, wherein a start moment of the first time window is k slots after the first message or the second message is sent, an end moment of the first time window is before a first uplink transmission resource, the first uplink transmission resource is used by the communication apparatus to receive second data from the first terminal device and the first data from the at least one second terminal device, and k is a positive integer.

47. The apparatus according to claim 46, wherein a value of k is indicated by using radio resource control RRC signaling.

48. The apparatus according to claim 45, wherein the first message further indicates a first configuration parameter, and the first configuration parameter comprises an offset value of a start moment of the first time window relative to a receiving moment of the first message and duration of the first time window; and
the second message further indicates a second configuration parameter, and the second configuration parameter comprises an offset value of the start moment of the first time window relative to a receiving moment of the second message and the duration of the first time window.

49. The apparatus according to any one of claims 45 to 48, wherein the first message comprises at least one piece of identification information, and the at least one first transmission resource is a resource in a sidelink transmission resource identified by the at least one piece of identification information.

50. The apparatus according to claim 46, wherein the communication apparatus further comprises:
a receiving unit, configured to receive, on the first uplink transmission resource, the second data from the first terminal device and/or the first data from the at least one second terminal device.

51. A communication apparatus, comprising a processor, wherein
the processor is configured to execute a computer program stored in a memory, to enable the apparatus to perform the method according to any one of claims 1 to 9, to enable the apparatus to perform the method according to any one of claims 10 to 15, or to enable the apparatus to perform the method according to any one of claims 16 to 21.

52. The apparatus according to claim 51, wherein the apparatus further comprises the memory.

53. A computer-readable storage medium, comprising a computer program, wherein when the computer program is run on a computer, the method according to any one of claims 1 to 9 is performed, the method according to any one of claims 10 to 15 is performed, or the method according to any one of claims 16 to 21 is performed.

54. A communication apparatus, wherein the communication apparatus comprises a logic circuit and an interface circuit, wherein
the interface circuit is configured to communicate with a module outside the communication apparatus; and
the logic circuit is configured to execute a computer program, to enable the communication apparatus to perform the method according to any one of claims 1 to 9, to enable the communication apparatus to perform the method according to any one of claims 10 to 15, or to enable the communication apparatus to perform the method according to any one of claims 16 to 21.

55. A computer program product, comprising a computer program, wherein when the computer program product is run on a computer, the method according to any one of claims 1 to 9 is performed, the method according to any one of claims 10 to 15 is performed, or the method according to any one of claims 16 to 21 is performed.
